(19) **Europäisches Patentamt / European Patent Office / Office européen des brevets**

(11) **EP 2 373 772 B1**

(12) **FASCICULE DE BREVET EUROPEEN**

(45) Date de publication et mention de la délivrance du brevet:
**18.12.2013 Bulletin 2013/51**

(21) Numéro de dépôt: **09806111.2**

(22) Date de dépôt: **28.12.2009**

(51) Int Cl.:
*C11C 3/04* (2006.01)   *C11B 1/04* (2006.01)
*A23K 1/14* (2006.01)   *C10L 1/02* (2006.01)

(86) Numéro de dépôt international:
**PCT/FR2009/052704**

(87) Numéro de publication internationale:
**WO 2010/076527 (08.07.2010 Gazette 2010/27)**

(54) **PROCEDE DE TRITURATION REACTIVE DES GRAINES DE RICIN**

VERFAHREN ZUR REAKTIVEN ZERMAHLUNG VON RIZINUSSAMEN

METHOD FOR THE REACTIVE GRINDING OF CASTOR SEEDS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **05.01.2009 FR 0950009**

(43) Date de publication de la demande:
**12.10.2011 Bulletin 2011/41**

(73) Titulaire: **Arkema France
92705 Colombes (FR)**

(72) Inventeurs:
- **DUBOIS, Jean-Luc**
  **F-69390 Millery (FR)**
- **MAGNE, Julien**
  **F-86240 Iteuil (FR)**
- **BARBIER, Jacques**
  **F-86360 Montamise (FR)**
- **PICCIRILLI, Antoine**
  **F-86000 Poitiers (FR)**

(56) Documents cités:
**US-A1- 2005 011 112**

- **MENEGHETTI S M P; MENEGHETTI M R; SERRA T M; BARBOSA D C; WOLF C R: "Biodiesel production from vegetable oil mixtures: Cottonseed, soybean, and castor oils" ENERGY AND FUELS, vol. 21, no. 6, novembre 2007 (2007-11), pages 3746-3747, XP002542982**

- **COULSON, E J; SPIES, J R; STEVENS, H: "The Allergen Content of Castor Beans and Castor Pomace" JOURNAL OF THE AMERICAN OIL CHEMISTS' SOCIETY, vol. 37, décembre 1960 (1960-12), pages 657-661, XP002542983**

- **GANDHI V M; CHERIAN K M; MULKY M J: "Detoxification of castor seed meal by interaction with sal seed meal" JOURNAL OF THE AMERICAN OIL CHEMISTS' SOCIETY, vol. 71, no. 8, août 1994 (1994-08), pages 827-831, XP002542984 cité dans la demande**

- **WALLER, G R; NEGI, S S: "Isolation of Ricin, Ricinine, and the Allergenic Fraction form Castor Seed Pomace from Two Different Sources" JOURNAL OF THE AMERICAN OIL CHEMISTS' SOCIETY, vol. 35, août 1958 (1958-08), pages 409-412, XP002542985**

- **GARDNER JR HK; D AQUIN EL; KOLTUN SP; MCCOURTNEY EJ; VIX HLE: "Detoxification and Deallergenization of Castor Beans" JOURNAL OF THE AMERICAN OIL CHEMISTS' SOCIETY, vol. 37, mars 1960 (1960-03), pages 142-148, XP002542986**

- **ANANDAN S ET AL: "Effect of different physical and chemical treatments on detoxification of ricin in castor cake" ANIMAL FEED SCIENCE AND TECHNOLOGY, ELSEVIER, vol. 120, no. 1-2, 9 mai 2005 (2005-05-09), pages 159-168, XP025393715 ISSN: 0377-8401 [extrait le 2005-05-09]**

- **HORTON JERRY; WILLIAMS MAURICE A: "A cooker-extruder for deallergenation of castor bean meal" OURNAL OF THE AMERICAN OIL CHEMISTS' SOCIETY, vol. 66, no. 2, février 1989 (1989-02), pages 227-231, XP002542987**

**(Cont. page suivante)**

• **PINA M; SEVERINO L S; BELTRAO N E M; VILLENEUVE P; LAGO R: "De nouvelles voies de valorisation pour redynamiser la filière ricin au Brésil" CAHIERS AGRICULTURES, vol. 14, no. 1, janvier 2005 (2005-01), pages 169-171, XP002542988**

**Description**

La présente invention concerne un procédé de trituration réactive de graines de ricin qui permet, en partant de graines de ricin spécifiquement conditionnées et en présence d'alcool léger et de catalyseur basique, d'effectuer en une seule étape la trituration et la réaction de transestérification des triglycérides présents dans l'huile de ricin, pour conduire à l'obtention simultanée d'un tourteau, de glycérol et d'esters d'acides gras, notamment d'acide ricinoléique. Ces derniers sont destinés principalement à la fabrication d'acide 11-amino undécanoïque, monomère constitutif du Rilsan® 11, qui est un polyamide aux propriétés physiques exceptionnelles, développé par la demanderesse. De plus, le procédé selon l'invention permet d'obtenir un tourteau complètement détoxifié et désallergénisé dans lequel et la toxine et l'allergène ont été inactivés. Les tourteaux obtenus par le procédé de traitement de graines de ricin selon l'invention gardent un intérêt nutritionnel et peuvent être directement utilisés dans l'alimentation animale, sans constituer un risque pour la santé des personnes qui les manipulent.

Il est connu de préparer, à partir de graines de plantes oléagineuses, des esters d'acides gras, en deux étapes, à savoir une étape d'extraction d'huile en présence de solvant et une étape de transestérification de cette huile en présence d'alcool et de catalyseur, conduisant à l'obtention d'une phase ester et d'une phase glycérol.

Les documents US 7 112 229 et US 2005/0011112 de Petrobas décrivent un procédé d'obtention d'esters d'acides gras pour une application biodiesel. Le procédé décrit est uniquement réalisé en mode batch (réaction en lit agité). Le procédé est mis en oeuvre à partir de graines de plantes oléagineuses riches en huiles (ayant un contenu en triglycérides allant de 15 à 70% en poids). Ce procédé comprend une étape préalable de conditionnement des graines, au cours de laquelle :

-   les graines sont décortiquées puis nettoyées au tamis vibrateur,
-   les graines nettoyées sont séchées de sorte à réduire leur taux d'humidité à moins de 0,5% en poids.

Les graines séchées sont introduites dans un réacteur avec de l'alcool anhydre ; ce mélange hétérogène est transformé en une suspension homogène au moyen d'un agitateur. Ce n'est qu'à ce moment qu'un catalyseur basique est introduit dans le réacteur. Ce mélange de réaction est ensuite chauffé pendant 30 à 90 minutes à une température de 30 à 78°C, conduisant à la transestérification des triglycérides en esters avec un taux de conversion élevé, compris entre 98 et 100%.

Toutefois, ce procédé présente les inconvénients suivants :

-   surcoût de production lié à l'utilisation d'un équipement de décorticage ;
-   génération de sous-produits solides à très faible valeur ajoutée (coques) ;
-   mauvaise tenue mécanique du tourteau ;
-   formation de fines responsables du colmatage des filtres ;
-   dans le cas des graines de ricin, risque toxique et allergénique du à la tendance des fines sèches de se dissiper dans l'air ambiant.

En effet, la graine de ricin renferme, en plus d'une puissante toxine (la ricine), des alcaloïdes toxiques tels que la ricinine et la ricinidine, ainsi qu'une protéine très allergène (CB-1A) qui, active à des concentrations de l'ordre du ppm (alors que sa concentration en poids est de 6,1 à 9% dans la graine décortiquée deshuilée et de 0,09 à 4,2% dans les tourteaux commerciaux deshuilés, selon Anandan et al. Animal Feed Science & Technology, 120 (2005) 159-168) peut provoquer chez l'homme de sévères réactions cutanées et des irritations graves du système respiratoire. La ricine est détruite à chaud et peut donc être inactivée par chauffage du tourteau. La ricinine et la ricinidine, quant à elles, ne sont présentes qu'en très faible quantité et ne posent pas de problèmes de toxicité dans la mesure où le tourteau de ricin n'intervient qu'en quantités limitées dans la formulation d'aliments pour bétail.

En conséquence, le seul point critique lors de la valorisation du tourteau de ricin est la protéine allergène CB-1A, susceptible de résister à la dénaturation thermique. A ce propos, de nombreuses études ont été effectuées afin de mettre au point une méthode de dénaturation de cette protéine ; la plupart aboutissent à des traitements efficaces mais les autres protéines présentes dans le tourteau sont également dégradées et le tourteau perd alors son intérêt nutritif.

Il est connu du document US 3.101.266 de désallergéniser et détoxifier des tourteaux de ricin par un traitement à base d'un mélange d'eau et de $Ca(OH)_2$ de sorte à obtenir un pH de 9,5 à 12,5 dans le tourteau puis de chauffer celui-ci 1h à 100-120°C. Pour que ce traitement soit efficace, la concentration de $Ca(OH)_2$ doit être d'au moins 8% en poids par rapport au poids du tourteau pour une température de chauffage de minimum 100°C et d'au moins 2% pour une température de 120°C. Outre le fait que ce procédé impose une étape supplémentaire longue et coûteuse, l'ajout de calcium contribue à stabiliser les phytates, composés anti-nutritionnels des tourteaux selon un processus de complexation impliquant le calcium et l'acide phytique et conduisant à la formation de sels stables, insolubles, non digestibles par l'animal (voir la publication de Mikic A. et al., « Anti-nutritional Factors in Some Grain Legumes », Biotechnol. Anim.

Husbandry 25(5-6),1181-1188, 2009**).** Ceci est confirmé par la publication d'Ekop A.S. et al, E - J. Chem. 5(4), 736-741, 2008**.**

Il est donc souhaitable de disposer d'un procédé de traitement des graines de ricin qui permette d'inactiver, d'une manière simple, rapide et peu coûteuse, en plus de la ricine, le puissant allergène CB-1A, ce qui rendrait alors possible d'une part, la manipulation sans risque par l'homme et, d'autre part, l'utilisation du tourteau de ricin en alimentation animale. Ceci est particulièrement important pour l'économie des pays grands producteurs de l'huile de ricin (Inde, Chine, Brésil), car, si l'huile de ricin a de multiples usages industriels, les tourteaux de ricin ne trouvent pas encore d'utilisation à l'échelle industrielle, notamment en raison des problèmes d'allergies évoqués plus haut.

La présente invention se propose de fournir un procédé de traitement de graines de ricin qui limite le nombre d'étapes de traitement des graines et la manipulation du tourteau, en vue d'une application industrielle en continu visant à produire des esters d'acide ricinoléique, et qui permette de détruire « à la source » la toxine et l'allergène présents dans les graines de ricin, si possible en maintenant une valeur nutritive au tourteau. L'autre avantage du procédé versus les procédés conventionnels réside dans les faibles quantités d'eau mises en oeuvre. Les opérations de raffinage de l'huile brute par exemple sont très gourmandes en eau. Cette économie d'eau est un atout majeur dans le cadre du développement de cette technologie dans les pays en cours de développement et dans une moindre mesure dans les pays riches puisque l'eau tend à devenir une commodité de plus en plus coûteuse.

A cet effet, l'invention a pour objet un procédé de traitement de graines de ricin, lesdites graines ayant un taux d'acidité inférieur à 2 mg KOH/g, ledit procédé comprenant les étapes suivantes :

i) une étape de conditionnement des graines ;

ii) une étape de mise en contact des graines conditionnées avec un alcool léger anhydre et un catalyseur alcalin dans des conditions de température et de durée suffisantes pour permettre l'extraction et la transestérification simultanées de l'huile végétale et conduisant à l'obtention d'un mélange comprenant des esters d'acides gras et du glycérol, et d'un tourteau.

Le procédé selon l'invention permet de faire réagir « in planta » l'alcool léger avec l'huile contenue au coeur de la graine. Dans ce procédé, l'alcool joue à la fois le rôle de solvant et de réactif.

De manière caractéristique, les graines sont conditionnées par une suite d'opérations comprenant une étape d'aplatissage et une étape de séchage de celles-ci.

Selon les conditions employées, le procédé selon l'invention peut conduire directement à l'obtention d'un tourteau détoxifié. Dans une variante de réalisation, le tourteau est soumis à une étape supplémentaire de séchage, dans des conditions de température et durée suffisantes pour inactiver et la ricine et l'allergène CB-1A. Dans d'autres variantes de réalisation, le tourteau est mélangé à l'état humide avec des tourteaux de sal (*Shorea robusta),* ou il est imbibé avec des solutions de tannins et/ou de polyphénols, pendant une durée suffisante pour inactiver la ricine et l'allergène CB-1A.

Avantageusement, le tourteau ainsi traité perd son caractère nocif et peut être manipulé sans danger par l'homme pour être utilisé en alimentation animale.

Par « graines de ricin » on entend dans le cadre de la présente invention des graines de plantes de ricin, seules ou en mélange avec des graines provenant d'au moins une autre plante oléagineuse, oléo-protéagineuse ou protéagineuse, y compris les graines de sal, les graines ou le mélange de graines produisant une huile contenant au moins 10% en poids d'acide ricinoléique. On ne sortirait pas du cadre de l'invention lorsque les graines mises en oeuvre dans le procédé selon l'invention proviennent en tout ou partie de plantes génétiquement modifiées produisant de l'acide ricinoléique, seules ou en mélange avec des plantes oléagineuses éventuellement génétiquement modifiées.

Les plantes oléagineuses sont cultivées spécifiquement pour leurs graines ou leurs fruits oléifères riches en matières grasses dont on extrait de l'huile à usage alimentaire, énergétique ou industriel. Les plantes protéagineuses appartiennent au groupe botanique des légumineuses dont les graines sont riches en protéines. Les plantes oléoprotéagineuses sont des légumineuses dont les graines contiennent aussi de l'huile.

Par « tourteau de ricin détoxifié» selon l'invention on entend un tourteau de ricin présentant à la fois :

- un taux de détoxification en ricine d'au moins 90% et de préférence d'au moins 95%, en activité, lorsque ce taux est mesuré au moyen d'un test quantitatif, tel que le test ELISA, ou de 100% lorsque ce taux est mesuré au moyen d'un test qualitatif ;
- et un taux d'inactivation de l'allergène CB-1A d'au moins 50% et de préférence d'au moins 75%, en activité, lorsque ce taux est mesuré au moyen d'un test quantitatif, ou de 100% lorsque ce taux est mesuré au moyen d'un test qualitatif.

Par «taux de détoxification » en ricine on entend le pourcentage de toxine inactivée dans le tourteau.

Par «taux d'inactivation » en allergène CB-1A on entend le pourcentage d'allergène inactivé dans le tourteau.

Avantageusement, le tourteau de ricin selon l'invention résulte directement de la mise en oeuvre du procédé selon l'invention, sa détoxification et sa désallergénisation ne nécessitant pas d'étapes et/ou de réactifs supplémentaires. Le tourteau selon l'invention possède un taux d'ions $Ca^{2+}$ qui est inférieur à 1,6% en poids, de préférence à 1% en poids, par rapport au poids du tourteau. Ce taux diffère de celui décrit dans le document US 3.101.266 qui est supérieur à 1,6% en poids par rapport au poids du tourteau. En effet, le taux moyen en $Ca^{2+}$ d'un tourteau de ricin non traité est de 0,6% en poids, alors que l'ajout en ions $Ca^{2+}$ au moyen d'un mélange $Ca(OH)_2$ /eau par le procédé décrit dans le document précité est d'au moins 1 % en poids.

D'autres caractéristiques et avantages ressortiront de la description détaillée du procédé de traitement de graines de ricin selon l'invention qui va suivre.

L'invention a pour objet un procédé de traitement de graines de ricin, seules ou en mélanges avec des graines provenant d'au moins une autre plante oléagineuse, oléo-protéagineuse ou protéagineuse, lesdites graines ayant un taux d'acidité inférieur à 2 mg KOH/g, ledit procédé comprenant les étapes suivantes :

  i) une étape de conditionnement des graines sans décorticage préalable;
  ii) une étape de mise en contact des graines conditionnées avec un alcool léger anhydre et un catalyseur alcalin dans des conditions de température et de durée suffisantes pour permettre l'extraction et la transestérification simultanées de l'huile végétale et conduisant à l'obtention d'un mélange comprenant des esters d'acides gras et du glycérol, et d'un tourteau,

caractérisé en ce que les graines sont conditionnées par une suite d'opérations comprenant une étape d'aplatissage et une étape de séchage de celles-ci.

L'huile de ricin comprend comme composant principal le triricinoléate de glycérol. L'acide ricinoléique est un acide gras hydroxylé. Aucune autre huile naturelle connue ne contient une proportion aussi élevée d'acides gras hydroxylés. C'est cette composition caractéristique des glycérides qui distingue l'huile de ricin de toutes autres graisses et huiles végétales et c'est elle qui lui donne ses propriétés physiques et chimiques remarquables. L'huile de ricin, non siccative, possède ainsi l'indice de viscosité et la densité les plus élevés entre toutes les huiles naturelles. Ces propriétés sont dues notamment aux liaisons d'hydrogène formées entre les groupes hydroxyles. Par ailleurs, le méthanol est beaucoup plus soluble dans l'huile de ricin, mais malheureusement le glycérol aussi. Ce sont ces propriétés qui imposent à l'huile de ricin un comportement très particulier lors des réactions chimiques et qui font que les procédés de transestérifcation d'huiles végétales « ordinaires » connus ne puissent pas tout simplement être transposés à l'huile de ricin (N.B. par « huile ordinaire » on entend les huiles non hydroxylées extraites de plantes oléagineuses telles que le tournesol, le colza, le soja, l'arachide, l'olivier, le sésame, le carthame, le coprah, le palme).

Une autre particularité des graines de ricin est liée à leur forte toxicité, due notamment à la présence de ricine et de l'allergène CB-1A (comme indiqué plus haut). Après l'extraction de l'huile, ces composés toxiques se concentrent dans les tourteaux, rendant problématique, voire dangereuse leur manipulation par l'homme.

Le procédé selon l'invention permet de résoudre de nombreux problèmes liés à la transestérification de l'huile de ricin. Ce procédé permet avantageusement de produire simultanément des esters d'acides gras et du glycérol et ce sans extraction préalable de l'huile, ainsi qu'un tourteau détoxifié (non allergisant et ne contenant plus de ricine active).

Le procédé selon l'invention permet de passer directement de la graine aux esters d'acides gras, notamment d'acide ricinoléique, en évitant les étapes de trituration, de raffinage, de purification et la production de sous-produits. Les esters d'acide ricinoléique obtenus par le procédé selon l'invention conviennent particulièrement à la préparation d'acide 11-amino undécanoïque, comme mentionné plus haut. Ces esters conviennent également à la fabrication de biocarburants. Par ailleurs, le procédé conduit à l'obtention de tourteaux détoxifiés, qui peuvent être manipulés sans danger par l'homme et peuvent être utilisés dans l'alimentation animale sans risque d'empoisonnement pour les animaux.

<u>Etape de conditionnement des graines</u>

La première étape du procédé selon l'invention consiste à conditionner les graines de ricin, utilisées seules ou en mélange avec d'autres graines de plantes oléagineuses, oléo-protéagineuses ou protéagineuses. Ce conditionnement est effectué sur les graines entières. Il comprend une première opération d'aplatissage des graines, suivie d'une opération de séchage des graines aplaties.

L'objectif du conditionnement de la graine est de rendre l'huile la plus accessible possible à l'alcool, sans toutefois trop altérer sa résistance mécanique. Ceci évite la formation d'une pâte et des fines, respectivement préjudiciables à la mise en oeuvre d'un procédé continu et à la purification finale des esters produits. Par ailleurs, la graine conditionnée doit permettre un passage aisé du fluide réactionnel (mélange alcool-catalyseur basique) selon un simple phénomène de percolation.

Selon une variante de réalisation, les graines fraîches sont aplaties sur un aplatisseur mécanique à rouleaux lisses ou cannelés. De préférence, les rouleaux utilisé sont cannelés.

Les graines ainsi aplaties sont séchées, par exemple dans une étuve ventilée thermorégulée ou dans un séchoir continu à bande ou rotatif à air chaud. La durée de séchage et la température sont choisies en sorte d'obtenir une diminution de l'humidité des graines à des valeurs inférieures ou égales à 2% en poids. De préférence, le séchage est réalisé rapidement après aplatissage, en moins de une heure, de préférence après 5 à 10 minutes, à une température suffisante pour réduire le taux d'humidité des graines à 2% en poids ou moins.

L'humidité résiduelle de la graine est déterminée par thermogravimétrie. La graine est préalablement broyée, puis le broyat obtenu est séché à 105°C dans une thermobalance jusqu'à stabilisation du poids. La teneur en eau est exprimée en pourcentage de la matière brute.

Dans une variante préférée de réalisation, l'étape i) de conditionnement des graines comprend en outre une opération de préchauffage des graines, effectuée avant l'opération d'aplatissage. Cette opération de préchauffage confère à la graine une plus grande plasticité et donc un écrasement plus efficace lors de l'aplatissage (gain au niveau de la surface de contact, de la vitesse de percolation de l'alcool et donc de sa capacité extractive). Elle a lieu de préférence à une température inférieure ou égale à 100°C.

Etape d'extraction et de transestérification

Les graines conditionnées comme décrit plus haut sont mises en contact avec un alcool léger anhydre et un catalyseur alcalin dans des conditions de température et de durée suffisantes pour permettre l'extraction et la transestérification de l'huile végétale et conduisant à l'obtention d'un mélange comprenant des esters d'acides gras et du glycérol, et d'un tourteau.

L'alcool léger utilisé à l'étape ii) est un alcool aliphatique inférieur tel que le méthanol, l'éthanol, l'isopropanol et le n-propanol, et de préférence est le méthanol.

Le catalyseur basique mis en oeuvre dans le procédé est choisi dans le groupe: soude, soude alcoolique, soude solide, potasse, potasse alcoolique, potasse solide, méthylate de sodium ou de potassium, éthylate de sodium ou de potassium, propylate de sodium et de potassium, isopropylate de sodium et de potassium.

La réaction a lieu dans un réacteur à lit fixe. Selon un mode de réalisation, le réacteur à lit fixe est une colonne de percolation thermorégulée équipée d'une grille. Une pompe permet d'alimenter la colonne en mélange alcool-catalyseur basique. L'alcool et le catalyseur sont donc ajoutés simultanément dans le réacteur, qui est maintenu à une température allant de 30 à 75°C, de préférence à environ 50°C. Le rapport massique catalyseur/alcool/graines est de préférence compris dans la gamme 0,001 à 0,01/0,1 à 5/1.

L'alimentation est réalisée en tête de lit ; le liquide réactionnel percole alors à travers le lit puis est récupéré dans une réserve située en aval, sous le lit. Par pompage, le liquide est renvoyé en tête de lit pour diffuser à nouveau dans le lit. La durée du cycle de recirculation du mélange alcool/catalyseur est de 15 à 60 minutes, de préférence de 20 à 40 minutes. En fin de cycle, l'alimentation en liquide est stoppée. Une partie du liquide encore présent dans les graines imbibées est alors récupérée par simple égouttage.

On réalise ensuite l'extraction et le lavage des graines. Pour cela, on alimente la colonne en alcool anhydre qui diffuse à nouveau par percolation sans recirculation ultérieure de l'alcool. La quantité de solvant est injectée pendant une période donnée (de l'ordre de 4 à 10 minutes), le liquide étant ensuite égoutté pendant une durée de 10 à 20 minutes. Le liquide récupéré peut subir une étape de neutralisation par ajout d'acide, puis une étape d'évaporation de l'alcool, pour conduire à un mélange de phases consistant en une phase plus légère riche en esters et une phase plus dense riche en glycérol. Aucune de ces phases ne contient de la ricine ou de l'allergène.

Le mélange de phases est soumis à une étape de décantation (consistant par exemple en une décantation statique dans un ou plusieurs décanteurs en parallèle ou en série, décantation centrifuge, combinaison de décantation statique ou centrifuge), permettant d'obtenir une phase supérieure composée majoritairement d'esters gras d'acide ricinoléique (phase ester) et une phase inférieure composée majoritairement de glycérine et d'eau (phase glycérine).

La phase ester est ensuite soumise à une séquence visant la récupération des esters gras d'acide ricinoléique, comprenant de manière connue une étape de lavage à l'eau suivie d'une étape de séchage sous vide.

Selon un autre mode de réalisation, le mélange de phases liquides collectées est soumis à une étape supplémentaire d'estérification neutralisante, qui consiste en à :

- rajouter au pool des phases liquides une quantité d'acide fort, tel que l'acide sulfurique ;
- chauffer la phase liquide acidifiée ainsi obtenue, et
- purifier la phase ester comme décrit plus haut.

L'ester d'acide ricinoléique ainsi obtenu est destiné notamment à la préparation d'acide 11-amino undécanoïque, suivant l'enchaînement suivant de réactions :

- pyrolyse ou craquage de l'ester notamment méthylique de l'acide ricinoléique, conduisant à l'obtention d'heptanal et d'undécylénate de méthyle ;

- hydrolyse de l'undécylénate de méthyle conduisant à l'obtention d'acide undécylénique ;
- hydrobromuration de l'acide undécylénique conduisant à l'obtention de l'acide 11-bromoundécanoïque, et
- amination de l'acide 11-bromoundécanoïque conduisant à l'obtention de l'acide 11-amino undécanoïque.

Dans une variante de réalisation, l'ester d'acide ricinoléique issu du procédé selon l'invention peut avantageusement être directement utilisé dans la synthèse d'acide 11-amino undécanoïque. Lorsque l'ester d'acide ricinoléique n'est pas suffisamment pur, une étape de purification supplémentaire peut être nécessaire, avant de le soumettre à la réaction de pyrolyse.

L'acide 11-amino undécanoïque ainsi obtenu est destiné principalement à la synthèse par condensation de polyamide 11 ou Rilsan® 11.

L'autre produit issu directement du procédé selon l'invention est le tourteau de ricin.

Selon une variante de réalisation, le tourteau maigre imbibé d'alcool est séché à l'étuve ventilée pendant 4h à une température inférieure ou égale à 200°C, de préférence inférieure ou égale à 150°C et encore plus préférentiellement inférieure ou égale à 120°C. Cette étape de séchage a pour but de détruire la ricine et l'allergène CB-1A restant dans le tourteau. En parallèle, cette étape de séchage permet d'éliminer du tourteau le solvant (alcool) utilisé lors de l'extraction.

Selon une autre variante de réalisation, le procédé selon l'invention ne comprend pas d'étape de séchage du tourteau à haute température (température supérieure à 120°C) ; selon les conditions mises en oeuvre, la ricine et l'allergène CB-1A peuvent être inactivés grâce aux traitements physiques et/ou chimiques appliqués aux graines de ricin au cours des étapes de conditionnement et d'extraction/transestérification décrites plus haut, de sorte que l'opération de séchage du tourteau à des températures élevées devient inutile. Dans ce cas, le procédé comprend seulement une étape de séchage du tourteau à des températures inférieures à 120°C, destinée à éliminer le solvant (alcool) utilisé lors de l'extraction, afin de permettre l'utilisation dudit tourteau dans l'alimentation animale.

Par ailleurs, certaines graines riches en tannins (dérivés de l'acide gallique et d'autres acides polyphénoliques) permettent grâce à une interaction chimique de ces molécules avec les protéines de ricin de détoxifier et de désallergéniser le tourteau de ricin. La publication de Gandhi et al (JAOCS, vol 71, n° 8, 1994, pages 827-831) décrit un procédé pour détoxifier les tourteaux de ricin en les mélangeant à l'état humide avec des tourteaux de sal (*Shorea robusta*). Ces derniers contiennent des tannins aptes à former des complexes avec les protéines solubles dans l'eau, conduisant ainsi à l'inactivation de la ricine et de l'allergène CB-1A. Dans une variante de réalisation, le procédé selon l'invention peut ainsi comprendre une étape supplémentaire de mélange des tourteaux de ricin à l'état humide avec des tourteaux de sal (*Shorea robusta)* dans un rapport massique allant de 2 :1 à 1 :5.

Alternativement on peut aussi ajouter directement des tannins ou des polyphénols sous forme de solutions destinées à imbiber les tourteaux obtenus par le procédé selon l'invention pendant une durée suffisante pour inactiver la ricine et l'allergène CB-1A.

Les tourteaux ainsi obtenus ont été soumis à des dosages de la ricine et de l'allergène CB-1A.

Il a été constaté que dans ces conditions, le tourteau de ricin est détoxifié, c'est à dire qu'il présente à la fois un taux de détoxification en ricine d'au moins 90% et de préférence d'au moins 95% en activité, lorsque ce taux est mesuré au moyen d'un test quantitatif, ou de 100% lorsque ce taux est mesuré au moyen d'un test qualitatif et pas de pouvoir sensibilisant dû à l'allergène CB-1A comme évalué au moyen d'un test qualitatif tel que le test LLNA.

Le test qualitatif de détection de ricine est utilisé pour déterminer le caractère actif ou inactif de la ricine dans les tourteaux ainsi que dans les phases liquides récupérées après l'étape d'extraction/transestérification. Un tel test peut être réalisé selon la technique ELISA (Enzyme-Linked ImmunoSorbent Assay), comme par exemple celui mis au point par la société EUROFINS sous le code d'analyse T/JJW7F. La limite de détection de cette méthode est de 10 ng ricine/ml.

Des méthodes de dosage quantitatif de la ricine connues peuvent être utilisées. Est citée à titre d'exemple la méthode décrite dans la publication : Becher F. et al. : « Detection of Functional Ricin by Immunoaffinity and Liquid Chromatography - Tandem Mass Spectrometry » Anal. Chem. 2007, 79, 659-665, qui présente une limite de détection inférieure à 0,1 ng/ml. On citera aussi la méthode de type ELISA développée par le Commissariat à l'Energie Atomique (CEA), permettant de quantifier la ricine à l'aide d'un kit de dosage spécifique mis au point pour doser ce toxique.

Par ailleurs, l'allergène CB-1A peut être dosé au moyen du test à la précipitine, décrit par exemple dans la publication : J.R. Spies et al. : « The Chemistry of Allergens. Inactivation of the Castor Bean Allergens and Ricin by Heating with Aqueous Calcium Hydroxyde », Agric. Food Chem. 10 (2), 1962, 140-145. Le pouvoir sensibilisant cutané du tourteau peut être avantageusement mesuré par la méthode qualitative du Local Lymph Node Assay (LLNA), méthode validée et recommandée par la Directive CE n° 440/2008 (règlement REACH) dans le cadre de l'évaluation de la toxicité des substances chimiques.

Le procédé selon l'invention peut sans difficulté être mis en oeuvre en continu à l'échelle industrielle, par exemple au moyen : d'un réacteur-extracteur à bande mobile fonctionnant en continu (type extracteur De Smet) ; d'un filtre rotatif ou d'une centrifugeuse. De préférence on opère la trituration réactive avec le méthanol à contre-courant du tourteau, sur plusieurs étages consécutifs.

Le procédé de trituration réactive selon l'invention est particulièrement bien adapté à des mélanges de graines, telles que les graines de soja, jatropha, carthame, colza, sal, car les propriétés solvantes de l'ester méthylique de l'acide ricinoléique confèrent des propriétés de synergie au milieu. Avantageusement, le tourteau de ricin qui ne peut pas être utilisé pur mais en mélange avec d'autres protéagineux, est alors directement mélangé avec d'autres sources de protéines.

Un mélange de départ constitué de graines de ricin (riches en huile) avec des graines oléagineuses (riches en protéines) dans un rapport allant de 1 : 1 à 1 : 10, conduit, par le procédé selon l'invention, à un mélange d'esters méthyliques d'acides gras contenant de 15 à 75%, dé préférence de 30 à 75% d'ester méthylique de l'acide ricinoléique, particulièrement approprié pour une utilisation comme biocarburant. Par exemple, un mélange de graines de ricin avec des de graines de soja en une proportion de 1 :9 conduit à l'obtention d'un mélange d'esters méthyliques d'acides gras comprenant de 38% en poids d'esters méthyliques d'acide ricinoléique (voir exemple 7).

Le procédé de trituration réactive de graines selon l'invention présente de multiples avantages.

Grâce à l'étape de conditionnement spécifique des graines, il est possible d'augmenter la surface de contact pour une meilleure percolation du mélange alcool-catalyseur et donc une meilleure extraction des lipides et leur transformation consécutive en esters. Aucune imprégnation préalable des graines conditionnées n'est nécessaire. La fraction ester obtenue à partir du mélange comprenant des esters d'acides gras et du glycérol convient particulièrement à la fabrication d'acide 11-amino undécanoïque, monomère utilisé dans la synthèse de polyamide 11.

Le fait de partir de graines entières permet :

- d'une part, de limiter fortement la formation de fines, en rendant plus faciles les étapes ultérieures de filtration, et en limitant le risque allergique et toxique puisque les fines sèches ont tendance à se dissiper / disperser dans l'air ambiant ;
- et d'autre part, de maintenir une bonne tenue mécanique du lit de graines aplaties (qui formera le tourteau), propriété très intéressante si l'on souhaite mettre en oeuvre la réaction dans un mode continu.

Les tourteaux sont obtenus directement à partir des graines, selon le procédé de l'invention. Ces tourteaux sont dépourvus de toxicité vis à vis de l'homme et peuvent donc être manipulés sans risques. Par ailleurs, ces tourteaux gardent leur intégrité physique (cohésion, résistance mécanique) et présentent une valeur nutritive intéressante, ce qui permet leur utilisation en alimentation animale.

L'invention et ses avantages seront mieux compris à la lecture des exemples ci-après donnés à titre purement illustratif.

Exemple 1. Trituration réactive des graines de ricin avec une extraction au méthanol effectuée en 3 étages (procédé réalisé dans un réacteur à lit fixe)

500 g de graines fraîches de ricin non décortiquées ont été conditionnées sur un aplatisseur de type Henry à cylindres lisses présentant un écartement fixe de 0,05 mm.

Les graines aplaties se présentent sous la forme de pétales de 0,2 mm d'épaisseur et d'un diamètre de 0,2 mm environ. Les graines aplaties ont été séchées à 60°C pendant 16 h. Leur teneur finale en eau est de 1,3% en poids.

Dans une colonne de percolation thermorégulée et à lit fixe, ces graines aplaties et séchées ont été mises en contact avec un mélange de soude et méthanol, contenant 0,5% en poids de soude par rapport à la graine et présentant un rapport massique alcool/graine de 1,15. Les réactions d'extraction et de transestérification ont lieu à une température de 50°C pendant 30 minutes. L'égouttage du lit est effectué pendant 15 minutes. Une extraction et un lavage des graines sont ensuite réalisés avec du méthanol en trois étages et à contre-courant.

La phase liquide obtenue est soumise à une décantation pour récupérer d'une part une phase plus légère riche en esters et une phase plus dense riche en glycérol. Le rendement en esters est de 77,2%.

Le tourteau obtenu est soumis à un séchage en étuve ventilée à 120°C pendant 4h. On constate que le tourteau maigre est relativement bien épuisé, avec un taux de matière grasse résiduelle de 5,4% (déterminé conformément à la norme NF ISO 659).

Des tests effectués pour doser la ricine et l'allergène CB-1A dans le tourteau montrent que le tourteau est détoxifié.

Exemple 2. Caractérisation de la graine de ricin

Trois lots de graines de ricin ont été évalués eu égard à leurs taux massiques de matières volatiles, matière grasse, leurs taux d'acidité de la matière grasse (exprimés en mg KOH/g) et leurs teneurs en ricine (exprimées en mg ricine/kg graines). Les résultats obtenus figurent dans le Tableau 1.

Tableau 1

| Caractéristiques | Méthode | Lot 1 | Lot 1B (2) | Lot 3 |
|---|---|---|---|---|
| Matières volatiles, % | NF ISO 665 | 5,2 | 5,6 | 5,2 |
| Matière grasse, % MS | NF ISO 659 | 52,2 | 54,0 | 52,2 |
| Acidité de la matière grasse, mg KOH/g | EN 14104 | 0,6 | 2,6 | 0,6 |
| Teneur en ricine, mg/kg | Elisa (1) | non recherchée | 18 000 (3) | non recherchée |
| (1) Méthode ELISA CEA (voir ci-après l'exemple 5).<br>(2) Le lot 1 B correspond au lot 1 après 12 mois de stockage.<br>(3) mesure effectuée sur un pétale de graine délipidé obtenu selon le mode opératoire décrit ci-après à l'exemple 4. | | | | |

Ces résultats montrent que les lots 1 et 3 présentent des acidités faibles (IA < 1 mg KOH/g) alors que le lot 1B, lequel correspond au lot 1 après 12 mois de stockage, est devenu fortement acide (IA > 2 mg KOH/g).

Exemple 3. Conditionnement du flocon de graine de ricin

La graine de ricin issue des bogues de ricin - graine constituée d'une coque fibreuse contenant une amande elle-même recouverte d'une peau fine (cuticule) - est aplatie telle quelle (graine entière) à l'aide d'un aplatisseur à cylindres cannelés, selon un procédé de double aplatissage décrit dans le tableau 2. Cette opération est réalisée par un double passage dans l'aplatisseur en vue d'obtenir un pétale de graine de ricin. Après aplatissage, le pétale est séché dans une étuve ventilée sous courant d'air chaud à 100°C pendant 16 heures en vue d'atteindre une humidité résiduelle inférieure à 2%.

Tableau 2

| Appareillage | 1er aplatissage | | 2ème aplatissage | |
|---|---|---|---|---|
| | Vitesse de rotation (tr/min) | Espace inter-cylindres (mm) | Vitesse de rotation (tr/min) | Espace inter-cylindres (mm) |
| Aplatisseur à cylindres Ø 240 mm, pas de cannelure 1strie/cm | 430 | 0,1 | 430 | 0,1 |
| Epaisseur moyenne du pétale (mm) | 0,4 à 0,6 mm | | 0,3 à 0,5 mm | |
| Longueur (mm) | 3 à 4 mm | | 2 à 3 mm | |

Exemple 4. Obtention du flocon délipidé

La délipidation du pétale de graine de ricin est réalisée en présence d'hexane dans un appareil de type soxhlet selon la méthode normalisée NF ISO 659. Le pétale délipidé est ensuite désolvanté sous courant d'air chaud dans une étude ventilée, à 60°C pendant 10 heures.

Exemple 5. Dosage de la ricine selon un test Elisa

On pèse précisément 250 mg de pétale de graine de ricin ou de tourteau, préalablement broyés (granulométrie moyenne : Ø = 1mm). A ces 250 mg sont ajoutés 5 ml d'un tampon d'extraction composé de 100 mM de phosphate de potassium (pH 7.4), 0,15M de chlorure de sodium, 0,1% de BSA (sérum-albumine bovine) et 0,01% d'azide de sodium. La solution obtenue est alors incubée 1 heure avec une mise sous agitation toutes les 10 minutes. Le surnageant est ensuite récupéré par sédimentation, centrifugé 15 minutes à 15000 tours/minute. On récupère enfin le surnageant pour un dosage des lectines, à l'aide d'un kit de dosage tel que développé par le Commissariat à l'Energie Atomique (Centre d'Etudes de Saclay France), dosage réalisé de la façon suivante :

- dilutions en série de 10 en 10 des surnageants dans un tampon de dilution de composition identique au tampon d'extraction ;

- première dilution 1/100, 6 dilutions par échantillons ;

- une fois cette concentration déterminée, un nouveau dosage est réalisé avec des dilutions de 3 en 3, et 8 dilutions par échantillon.

Ont été évalués un lot de pétales délipidés de graine de ricin (lot 1B) tels que préparés à l'exemple 4 et le tourteau issu du procédé de trituration réactive de l'essai 09-E08 préalablement chauffé à l'étuve à 120°C pendant 4 heures. Les résultats obtenus sont présentés dans le tableau 3 ci-dessous.

Tableau 3

| Produit testé | Ricine (%/matière brute) | Taux d'abattement par rapport au pétale délipidé (%) |
|---|---|---|
| Pétale de graine ricin délipidé | 1,8 | - |
| Tourteau essai 09-E08 (renvoi à l'exemple 6.1) | $8,6 \times 10^{-4}$ | 99,95 |

On constate que la ricine initialement présente dans le pétale délipidé à une teneur élevée (1,8%), n'est quasi plus présente dans le tourteau issu du procédé de trituration réactive (teneur très faible $<10^{-3}$%), soit plus de 2000 fois plus faible qu'initialement.

Exemple 6. Essais de trituration réactive

Le flocon préalablement séché est introduit dans une colonne de percolation thermorégulée équipée d'une grille support (lit supporté). La température de la colonne est régulée à 50°C. Une pompe permet d'alimenter la colonne en mélange réactionnel méthanol-soude ou en méthanol anhydre. L'alimentation est réalisée en tête de lit. Le liquide réactionnel percole alors à travers le lit puis est récupéré dans une réserve située en aval, sous le lit de flocon. Par pompage, le liquide est renvoyé en tête de lit pour diffuser à nouveau dans le lit de flocon. La durée du cycle de recirculation du mélange est de 30 minutes est considérée comme étant égale à la durée de la réaction.
En fin de cycle, l'alimentation en liquide est stoppée. Une partie du liquide encore présent dans le flocon imbibé est alors récupérée par simple égouttage (durée 15 minutes).
Dans une seconde étape, on réalise l'extraction et le lavage du flocon. Pour cela, on alimente la colonne en méthanol anhydre qui diffuse à nouveau par percolation sans recirculation ultérieure du méthanol. La quantité requise de solvant est injectée pendant une durée de 5 min, le liquide est ensuite égoutté pendant 15 minutes. On réalise ainsi 5 cycles de lavage. Le tourteau maigre imbibé d'alcool est ensuite séché à l'étuve ventilée à 120°C pendant 4h.
Les phases liquides obtenues soit après réaction ou soit à la suite des lavages du tourteau par le méthanol anhydre, sont rassemblées pour être purifiées. Le méthanol est tout d'abord éliminé par distillation sous vide à l'aide d'un évaporateur rotatif (90°C sous un vide final de 40mbar). La phase grasse récupérée est ensuite centrifugée (4500tr/min) pendant 5 minutes afin de séparer l'ester de la glycérine brute. L'ester est enfin lavé à l'eau déminéralisée à une température de 90°C, jusqu'à neutralité des eaux de lavage. L'ester est enfin séché à une température de 90°C sous un vide de 40 mbar.

Exemple 6.1. Influence de la quantité de catalyseur basique de trituration réactive

Des essais à teneur variable en catalyseur engagé dans la réaction de trituration réactive (soude) ont été réalisés ; les résultats obtenus sont présentés dans le tableau 4.
On observe que, pour une teneur de 0,3% en catalyseur, on obtient un rendement maximal en esters méthyliques (87,1 %), alors qu'avec 0,1 % de catalyseur, le rendement obtenu est plus faible (57,5%). Les rendements en glycérine sont tous supérieurs à 100% indiquant que la glycérine récupérée en fortement chargée en impuretés : eau, sels, savons, matière grasse polaire, hydrates de carbone.

Tableau 4

| Critère | ESSAI 09-E08 | ESSAI 09-E11 | ESSAI 09-E12 |
|---|---|---|---|
| Masse de pétales de graine de ricin du lot 1B, g | 350 | 350 | 350 |
| Masse de méthanol, g | 700 | 700 | 700 |
| Masse de soude engagée, g | 1,1 | 0,7 | 0,35 |
| Rapport massique méthanol/pétale | 2 | 2 | 2 |
| % catalyseur par rapport au pétale | 0,30 | 0,20 | 0,10 |
| Rendement esters méthyliques, % | 87,1 | 86,3 | 57,5 |
| % matière grasse dans le tourteau maigre, % équivalents esters méthyliques | 2,6 | 3,5 | 3,7 |
| Perte en esters (valeur calculée)**, % | 10,3 | 10,2 | 38,8 |
| Rendement glycérine, % | 161 | 153 | 203 |

** perte en esters = [masse d'esters théorique] – [masse d'esters produits] – [masse potentielle d'esters dans le tourteau maigre]

Les esters purifiés obtenus dans les différents essais ont été analysés (tableau 5).

Tableau 5

| Critère | ESSAI 09-E08 | ESSAI 09-E011 | ESSAI 09-E12 |
|---|---|---|---|
| *% catalyseur par rapport au pétale* | *0,3* | *0,2* | *0,1* |
| Indice d'acide (mg KOH/g) | 0,46 | 0,52 | 0,60 |
| Teneur en MeC16 (%) | 0,85 | 0,75 | 0,50 |
| Teneur en MeC18 :2 (%) | 2,90 | 3,02 | 1,92 |
| Teneur en MeC18 :1 (%) | 3,46 | 2,09 | 1,08 |
| Teneur en Me C18 :0 (%) | 0,96 | 0,71 | 0,73 |
| Teneur en Ricinoléate de méthyle (%) | 90,65 | 73,16 | 49,80 |
| Teneur en Monoglycéride (%) | 1,19 | 16,14 | 12,22 |
| Teneur en Diglycéride (%) | nd | 0,80 | 4,28 |
| Teneur en Triglycéride (%) | nd | 0,38 | 28,77 |
| nd : non détecté | | | |

Pour des teneurs de 0,1 et 0,2% en catalyseur, les esters produits présentent des teneurs modestes en ricinoléate de méthyle (<75%) et inversement élevées en produits secondaires indésirables, en l'occurrence des mono, di et triglycérides. Inversement, en présence de 0,3% de catalyseur, la teneur en ricinoléate de méthyle est élevée (>90%) et les glycérides très correctement transformés : 1,2% de monoglycérides et une absence totale de di et triglycérides. En présence de 0,3% de catalyseur, les esters obtenus présentent la plus faible acidité résiduelle. On note enfin, la robustesse du procédé qui permet de transestérifier directement avec un rendement appréciable, des huiles de graines présentant des acidités élevées (>2 mg KOH/g) incompatibles avec les procédés classiques.

Exemple 6.2. Influence de la quantité d'alcool

Des essais ont été réalisés avec des teneurs variables en alcool (tableau 6).
De ces résultats il résulte que la quantité d'alcool engagée n'a pas d'effet marquant sur la le rendement global en esters méthyliques.

Tableau 6

| Critère | ESSAI 09-E25 | ESSAI 09-E08 |
|---|---|---|
| Masse de pétales de graine de ricin du lot 1B, g | 280 | 350 |
| Masse de méthanol engagée dans l'étape de trituration réactive, g | 700 | 700 |
| Masse de soude engagée, g | 0,84 | 1,1 |
| Rapport massique méthanol/pétale | 2,5 | 2,0 |
| % catalyseur par rapport au pétale | 0,30 | 0,30 |
| Masse de méthanol engagée au cours des étapes de lavage du pétale (en 5 passes), g | 1400 | 1750 |
| Rendement esters méthyliques, % | 88,7 | 87,1 |
| % matière grasse dans le tourteau maigre, % équivalents esters méthyliques | 4,3 | 2,6 |
| Perte en esters (valeur calculée)**, % | 7,0 | 10,3 |
| Rendement glycérine, % | 141,3 | 161 |

**perte en esters = [masse d'esters théorique] – [masse d'esters produits] – [masse potentielle d'esters dans le tourteau maigre]

Les résultats figurant dans le tableau 7 ci-après montrent que l'acidité finale des esters est améliorée lorsque plus d'alcool est engagé.

Tableau 7

| Critère | ESSAI 09-E25 | ESSAI 09-E08 |
|---|---|---|
| *Rapport massique méthanol/pétale* | *2,5* | *2,0* |
| Indice d'acide (mg KOH/g) | 0,23 | 0,46 |
| Teneur en MeC16 (%) | 1,01 | 0,85 |
| Teneur en MeC18:2 (%) | 3,98 | 2,90 |
| Teneur en MeC18:1 (%) | 3,14 | 3,46 |
| Teneur en Me C18 :0 (%) | 0,85 | 0,96 |
| Teneur en Ricinoléate de méthyle (%) | 89,19 | 90,65 |
| Teneur en Monoglycéride (%) | 1,82 | 1,19 |
| Teneur en Diglycéride (%) | 0,00 | nd |
| Teneur en Triglycéride (%) | 0,00 | nd |
| nd : non détecté | | |

Exemple 6.3. Influence de la durée du cycle réactionnel.

Un essai a été réalisé en doublant le temps de passage (ou temps de contact) de la solution alcoolique et catalytique sur le lit de pétales de graine, c'est-à-dire en doublant la durée de la réaction. Les résultats obtenus sont présentés dans le tableau 8 ci-dessous.

Tableau 8

| Critère | Essai 09-E26 | Essai 09-E08 |
|---|---|---|
| Masse de pétales de graine de ricin du lot 1B, g | 350 | 350 |
| Masse de méthanol, g | 700 | 700 |
| Masse de soude engagée, g | 1,1 | 1,1 |
| Durée du cycle réactionnel (temps de contact), min | 60 | 30 |
| Rapport massique méthanol/pétale | 2,0 | 2,0 |
| % catalyseur par rapport au pétale | 0,3 | 0,3 |
| Rendement esters méthyliques, % | 90,4 | 87,1 |
| % matière grasse dans le tourteau maigre, % équivalents esters méthyliques | 4,5 | 2,6 |
| Perte en esters (valeur calculée)**, % | 5,1 | 10,3 |
| Rendement glycérine, % | 137 | 161 |

** perte en esters = [masse d'esters théorique] – [masse d'esters produits] – [masse potentielle d'esters dans le tourteau maigre]

Ces résultats montrent que l'augmentation du temps de cycle réactionnel permet d'accroître le rendement global en esters méthyliques. De même, le rendement en glycérine diminue inversement au temps de contact, semblant indiquer une présence moins importante d'impuretés dans la glycérine.

Tableau 9

| Critère | ESSAI 09-E25 | ESSAI 09-E08 |
|---|---|---|
| *Durée du cycle réactionnel (temps de contact), min* | *60* | *30* |
| Indice d'acide (mg KOH/g) | 0,29 | 0,46 |
| Teneur en MeC16 (%) | 0,71 | 0,85 |
| Teneur en MeC18 :2 (%) | 3,31 | 2,90 |
| Teneur en MeC18 :1 (%) | 2,90 | 3,46 |
| Teneur en Me C18 :0 (%) | 0,86 | 0,96 |
| Teneur en Ricinoléate de méthyle (%) | 90,34 | 90,65 |
| Teneur en Monoglycéride (%) | 1,82 | 1,19 |
| Teneur en Diglycéride (%) | 0,05 | nd |
| Teneur en Triglycéride (%) | 0,00 | nd |
| nd : non détecté | | |

Au plan qualitatif, les résultats du tableau 9 montrent que l'augmentation du temps de cycle réactionnel améliore l'acidité résiduelle des esters finaux mais ne contribue pas à améliorer la teneur en monoglycérides.

Exemple 6.4. Procédé de trituration réactive des graines de ricin incluant une étape de neutralisation des acides gras libres par estérification

Une variante du procédé a été testée en rajoutant une étape d'estérification neutralisante des phases liquides collectées. Cette étape comprend les opérations unitaires suivantes :

- les phases liquides du procédé sont collectées puis rassemblées ;

- une mesure en « extrait sec » de ces phases est réalisée en évaporant le méthanol présent dans un aliquote des phases liquides. La masse de produit résiduelle permet de calculer la teneur en « extrait sec » selon la formule suivante : *Teneur en « extrait sec » = 100 $\times$ [ masse résiduelle après évaporation du méthanol]/ masse des phases liquides avant évaporation.*

- des quantités variables d'acide sulfurique 2,5N sont ajoutées au pool des phases liquides ;

- la phase liquide acidifiée est alors portée à 50°C pendant 15 minutes ;

- on procède ensuite aux étapes unitaires classiques de purification des esters (évaporation du méthanol, séparation du glycérol, lavage des esters et séchage) telles que décrites dans l'exemple 5.

Dans le cadre de ces essais, a été engagée une graine peu acide (lot 3). Au vu des résultats du tableau 10, il apparaît qu'en présence d'une graine peu acide, et sans l'étape d'estérification neutralisante, le rendement en esters est supérieur à 90%. Dans les mêmes conditions, le rendement en glycérine chute à une valeur de 124% indiquant que moins de savons se sont formés issue de la saponification partielle du catalyseur. Les valeurs en italiques présentent une incertitude importante ($\pm$20%) liées à la réalisation d'essais sur des aliquotes de phase liquide.

Sur le plan qualitatif, les effets de l'étape d'estérification neutralisante présentés dans le tableau 11 ci-après montrent que :

- l'acidité résiduelle des esters finaux tend à augmenter légèrement avec la quantité d'acide sulfurique mise enjeu au cours de l'étape d'estérification neutralisante ;

- en revanche, la pureté en ricinoléate (produit cible) tend à croître avec la quantité d'acide sulfurique mise en jeu au cours de l'étape d'estérification neutralisante. Ce résultat est concomitant à la diminution des monoglycérides indésirables ;

- un optimum correspondant au meilleur compromis entre, d'une part, le rendement et la pureté en ricinoléate de méthyle, et d'autre part, l'acidité résiduelle des esters, se situe dans la gamme allant de 0,1% à 0,3% d'acide sulfurique engagé au cours de l'étape d'estérification neutralisante.

Tableau 10

| Critère | ESSAI 09-E30-1 | ESSAI 09-E30-2 | ESSAI 09-E30-4 | ESSAI 09-E30-3 |
|---|---|---|---|---|
| Masse de pétales de graine de ricin du lot 3, g | 350 | | | |
| Masse de méthanol, g | 700 | | | |
| Masse de soude engagée, g | 1,1 | | | |
| Durée du cycle réactionnel (temps de contact), min | 30 | | | |
| Température réaction (°C) | 50 | | | |
| Rapport massique méthanol/pétale | 2 | | | |
| % catalyseur par rapport au pétale | 0,30 | | | |
| Estérification neutralisante % $H_2SO_4$ vs Teneur en extrait sec $H_2SO_4$ 2,5N, ml | 0,0 0,0 | 0,1 1,6 | 0,3 4,8 | 0,4 6,4 |
| Rendement esters méthyliques, % | 96,0 | 93±20 | 70±20 | 70±20 |
| % matière grasse dans le tourteau maigre, % équivalents esters méthyliques | 4,0 | 4,0 | 4,0 | 4,0 |
| Perte en esters (valeur calculée)**, % | 0 | nd | nd | nd |
| Rendement glycérine, % | 124 | 90 ±20 | 90 ±20 | 90 ±20 |

** perte en esters = [masse d'esters théorique] – [masse d'esters produits] – [masse potentielle d'esters dans le tourteau maigre]

Nd - Non Déterminée

Tableau 11

| Critère | ESSAI 09-E30-1 | ESSAI 09-E30-2 | ESSAI 09-E30-4 | ESSAI 09-E30-3 |
|---|---|---|---|---|
| % $H_2SO_4$ vs Teneur en extrait sec | 0,0 | 0,1 | 0,3 | 0,4 |
| Indice d'acide (mg KOH/g) | 0,14 | 0,17 | 0,49 | 0,63 |
| Teneur en MeC16 (%) | 0,97 | 0,79 | 0,84 | 0,86 |
| Teneur en MeC18 :2 (%) | 3,76 | 3,37 | 3,52 | 3,55 |
| Teneur en MeC 18 :1 (%) | 3,76 | 3,37 | 3,52 | 3,55 |
| Teneur en Me C18 :0 (%) | 1,31 | 1,30 | 1,20 | 1,36 |
| Teneur en Ricinoléate de méthyle (%) | 87,65 | 89,52 | 90,55 | 90,32 |
| Teneur en Monoglycéride (%) | 2,11 | 1,59 | 0,33 | 0,32 |
| Teneur en Diglycéride (%) | 0,44 | 0,04 | 0,03 | 0,03 |
| Teneur en Triglycéride (%) | 0,00 | 0,00 | 0,00 | 0,00 |

<u>Exemple 6.5. Evaluation de la toxicité aiguë et du pouvoir sensibilisant des pétales et tourteaux de graines de ricin produits au cours du procédé</u>

<u>Evaluation du pouvoir sensibilisant</u>

Le pouvoir sensibilisant des tourteaux et des pétales délipidés de graines de ricin a été évalué selon le test dit du *LLNA* (*Local Lymph Node Assay*) adapté des lignes conductrices de l'OECD No. 429, du 24 avril 2002 et du Council Regulation (EC) No. 440/2008, B.42, du 3 mai 2008. Une bonne corrélation du pouvoir allergisant a été trouvée entre les seuils déterminés expérimentalement chez la souris par la méthode du *LLNA* et ceux déterminés chez l'homme par la méthode du *Human Repeated Insult Patch Test* (HRIPT, J.-P. Lepoittevin. Allergènes de contacts forts. Revue Française d'Allergologie et d'Immununologie Clinique, 48 (2008), 120-122). La méthode du LLNA repose sur l'application de la substance à tester sur l'oreille d'un groupe de souris aux jours 0, 1, 2 et l'injection de thymidine tritiée au jour 5. La mesure de l'incorporation de la radioactivité dans les ganglions drainant permet de mesurer la prolifération cellulaire faisant suite à l'exposition à la substance testée. Par comparaison aux méthodes plus anciennes de désallergénisation des tourteaux de ricin, la méthode du LLNA est aujourd'hui entièrement reconnue et même préconisée par les autorités européennes dans le cadre du Règlement Communautaire REACH (Directive CE

Les souris femelles sélectionnées pour le test du *LLNA* sont de l'espèce standardisée CBA/j. Leur âge au premier jour de traitement est compris entre 8 et 12 semaines et leur poids entre 18 et 25 g $\pm$ 20%. Pour chaque dose, la cohorte est constituée de 3 souris évoluant dans la même cage.

Le réactif utilisé en vue de provoquer la prolifération est la [3H] methyl-thymidine (3H-TdR; GE Healthcare, Les Ulis, France). Au moins 3 jours avant les injections, la quantité requise de 3H-TdR est diluée à 0.9% NaCl (20 $\mu$Ci of 3H-TdR dans 250 $\mu$L et 0.9% NaCl par animal). La solution obtenue est stockée à +4° à l'abri de la lumière.

Un essai préliminaire est réalisé sur chaque animal par mesure au micromètre de l'épaisseur de l'oreille avant chaque application et 72 heures après la dernière.

Le véhicule le plus adapté à l'évaluation du pouvoir sensibilisant des tourteaux et pétales délipidés de graine de ricin est une suspension homogène de ces matières à 10 et 25% dans le propylène glycol.

Ont été évalués un lot de pétales délipidés de graine de ricin tels que préparés selon l'exemple 4 et le tourteau issu du procédé de trituration réactive de l'essai 09-E08 de l'exemple 6.1 préalablement chauffé à l'étuve à 120°C pendant 4 heures. Des résultats présentés dans le tableau 12 il résulte que le tourteau issu du procédé de trituration réactive selon l'invention ne présente plus de pouvoir sensibilisant contrairement au pétale délipidé lequel est fortement sensibilisant.

Tableau 12

| Produit testé | Essai principal | |
|---|---|---|
| | Dose maximale de test (%) | Observations principales |
| Pétale de graine de ricin délipidé | 10(1) | hyperprolifération lymphocytaire attribuée à de l'hypersensitivité de contact conclusion : produit sensibilisant |
| Tourteau essai 09-E08 | 10 | aucune hyperprolifération lymphocytaire n'a été notée conclusion : produit non sensibilisant |
| (1) dose définie au cours de l'essai préliminaire suite à la mort de 2 animaux sur 3 après application du produit formulé à 10 et 25%. Le 3ème animal survivant n'a en revanche pas déclenché d'irritation des oreilles à la dose de 10% (dose retenue pour le test principal) | | |

Evaluation de la toxicité aiguë

La toxicité aiguë des tourteaux et des pétales délipidés de graines de ricin a été évaluée selon les lignes conductrices de l'OECD No. 423, du 17 décembre 2001 et du Council Regulation (EC) No. 440/2008, B.1 tris du 3 mai 2008. Les rats femelles sélectionnés pour le test de toxicité aiguë sont de l'espèce standardisée Sprague-Dawley. Le véhicule utilisé au cours de l'évaluation des tourteaux et pétales délipidés de graine de ricin est une poudre de méthylcellulose (0,5%). L'administration du produit est réalisée de J0 à J8. Les doses journalières administrées en tourteaux et pétales délipidés de graines de ricin sont 50 ; 300 et 2000 mg/kg de poids corporel. Pour chaque dose, un groupe de 3 rats femelles a été constitué.

Tableau 13

| Produit | Dose journalière (mg/kg) | Observations principales | DL50 |
|---|---|---|---|
| Pétale de grainericin délipidé | 50 | aucune mortalité à J8 aucun signe clinique aucune anormaiité histologique aucun gain de poids | DL50>50 |
| | 300 | aucune mortalité à J8 aucun signe clinique aucune anormalité histologique léger gain de poids | DL50>300 |
| | 2000 | Mortalité 100% à J2 (pilo-érection préliminaire à la mort) | 300<DL50<2000 |
| Tourteau essai 09-E08 | 50 | aucun signe clinique de J2 à J8 | DL50>50 |
| | 300 | aucun signe clinique de J2 à J8 | DL50>300 |
| | 2000 | aucun signe clinique de J2 à J8 léger gain de poids | DL50>2000 |

Ces résultats montrent que l'administration de pétales de graine de ricin délipidé à des rats entraîne une mortalité de 100% à la dose de 2000 mg/kg dès le second jour. En revanche, l'administration du tourteau issu du procédé de trituration réactive n'entraîne aucune mortalité des rats et aucun signe clinique à la dose de 2000 mg/kg pendant 8 jours. Par conséquent, le tourteau est bien détoxifié à la sortie du procédé. On note même un gain de poids au plus fort du dosage.

Exemple 7. Trituration réactive en présence d'un mélange de graines oléagineuses

Un essai a été réalisé à partir de mélanges de graines de ricin (lot 1) et de soja.

Le lot de fèves de soja a d'abord été analysé afin de caractériser la fève de soja. Les résultats présentés dans le tableau 14 montrent que la graine de soja mise en oeuvre est faiblement acide (IA<2 mg KOH/g) et conforme à la littérature relativement à sa teneur en lipides.

Tableau 14

| Caractéristiques | Méthode | fève de soja |
|---|---|---|
| Matières volatiles, % | NF ISO 665 | 11,3 |
| Matière grasse, % MS | NF ISO 659 | 20,6 |
| Acidité de la matière grasse, mg KOH/g | EN 14104 | 1,6 |

Des essais de trituration réactive ont ensuite été réalisés sur la fève de soja isolée et en mélange (tableau 15). Ces résultats présentés montrent que :

- la fève de soja isolée simplement aplatie selon un processus de double-aplatissage conduit à un rendement médiocre en esters méthyliques (39,2%). Le tourteau issu de cet essai est encore riche en huile;

- en présence de pétales de graines de ricin (mélange 50/50), on constate que le rendement en esters méthyliques (52,3%) est supérieur à l'addition des rendements respectifs obtenus en présence des graines isolées (44% théorique) ;

- en présence du mélange de pétales ricin-soja 10/90, le rendement en esters méthyliques (74%) est légèrement supérieur à celui des graines prises isolément (70% théorique).

L'ensemble de ces résultats montre qu'il techniquement possible d'obtenir un rendement appréciable en esters à partir d'un mélange de pétales de graines.

Tableau 15

| Critère / Essai | ESSAI 09-E14 | ESSAI 09-E19 | ESSAI 09-E21 |
|---|---|---|---|
| Masse de pétales de graine de ricin du lot 1B, g | 0,0 | 175 | 35 |
| Masse de pétales de fève de soja, g | 350 | 175 | 315 |
| Rapport massique pétale ricin/pétale soja | 0/100 | 50/50 | 10/90 |
| Masse de méthanol, g | 700 | 700 | 700 |
| Masse de soude engagée, g | 1,1 | 1,1 | 1,1 |
| Durée du cycle réactionnel (temps de contact), min | 30 | 30 | 30 |
| Température réaction (°C) | 50 | 50 | 50 |
| Rapport massique méthanol/pétale soja + ricin | 1,15 | 2 | 2 |
| % catalyseur par rapport aux pétales soja + ricin | 0,3 | 0,3 | 0,3 |
| Rendement esters méthyliques, % | 39,2 | 52,3 | 74,0 |
| matière grasse dans le tourteau maigre, % équivalents esters méthyliques | 16,6 | 18,7 | 6,7 |
| Perte en esters (valeur calculée)**, % | 44,2 | 29 | 19,3 |
| Rendement glycérine, % | 303 | 262 | 202 |

** perte en esters = [masse d'esters théorique] – [masse d'esters produits] – [masse potentielle d'esters dans le tourteau maigre]

Les esters obtenus ont été analysés et les résultats obtenus sont montrés dans le tableau 16. Les valeurs entre parenthèses représentent le pourcentage théorique en acides gras.

Tableau 16

| Critère / Essai | ESSAI 09-E14 | ESSAI 09-E19 | ESSAI09-E21 |
|---|---|---|---|
| *Rapport massique pétale ricin/pétale soja* | *0,0* | *50/50* | *10/90* |
| Indice d'acide IA (mg KOH/g) | <0,1 | 0,41 | 0,11 |
| Teneur en MeC16(%) | 10,22 | 2,20 (3,3) | 6,39 (7,8) |
| Teneur en MeC18 :2 (%) | 30,01 | 4,88 (6,6) | 34,64 (14,5) |
| Teneur en MeC18 : (%) | 47,11 | 14,11 (22,0) | 16,66 (53,8) |
| Teneur en Me C18 :0 (%) | 9,19 | 1,35 (1,7) | 2,57 (3,3) |
| Teneur en Ricinoléate de méthyle (%) | nd | 75,64 (66,3) | 38,88 (20,7) |
| Teneur en Monoglycéride (%) | 3,16 | 1,50 | 0,31 |
| Teneur en Diglycéride (%) | 0,21 | 0,11 | 0,10 |
| Teneur en Triglycéride (%) | nd | nd | nd |

Exemple comparatif 8. Procédé PETROBRAS d'obtention d'esters d'acides gras selon US 2005/0011112.

Les caractéristiques des réactifs et de la graine mise en oeuvre dans l'essai sont présentées dans les tableaux 17 et 18.

Tableau 17

| Réactifs et graine de ricin | Fournisseur | Pureté (%) |
|---|---|---|
| Ethanol anhydre | CIRON | 99,9 |
| Ethylate de sodium | X | 96 |
| Graine de ricin | Arkema | - |

Tableau 18

| Caractéristiques | Méthode | Lot 3 |
|---|---|---|
| Matières volatiles, % | NF ISO 665 | 5,2 |
| Matière grasse, % MS | NF ISO 659 | 52,2 |
| Acidité de la matière grasse, mg KOH/g | EN 14104 | 0,6 |

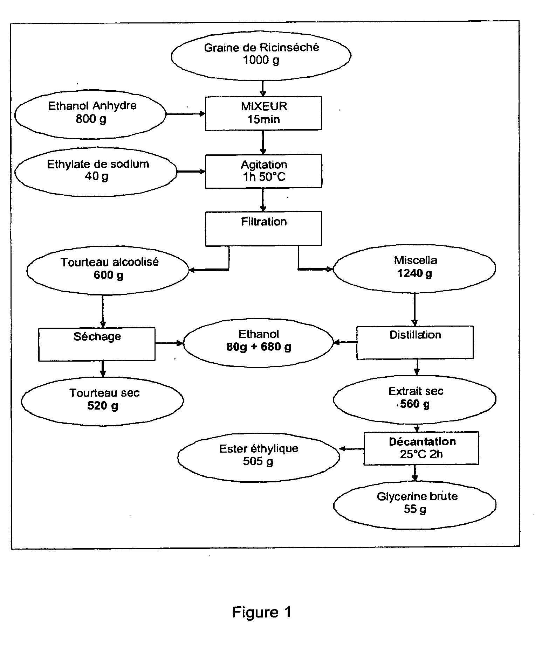

L'essai a été reproduit tel que décrit dans le document US 2005/0011112. En tant que catalyseur a été utilisé de l'éthylate de sodium à 96%. Aussi, le titre en éthylate n'étant pas indiqué, il a été considéré que le schéma de procédé illustré à la figure 1 de ce document exprimait une valeur en équivalent éthylate, soit 40 g. De même, l'essai a été reproduit en présence d'une graine séchée à 0,5% d'humidité.

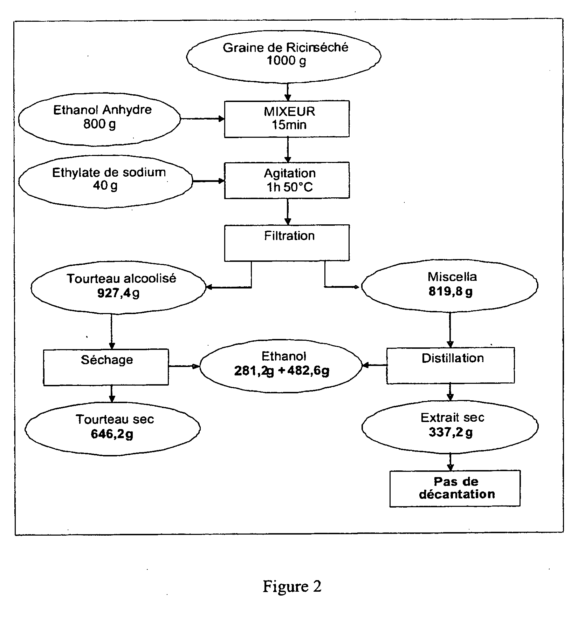

Les figures 1 et 2 annexées et le tableau 19 présentent les bilans matières obtenus. La figure 1 présente le bilan selon le document US 2005/0011112. La figure 2 présente le bilan selon l'exemple comparatif 8.

Les figures 1 et 2 et le tableau 19 mettent en évidence un écart très important sur les masses de produits et de coproduits circulants. A titre d'exemple : + 250% d'éthanol récupéré dans le tourteau, - 100% d'ester éthylique et de glycérine puisque aucun de ces 2 produits cibles n'est récupéré, - 40% d'extrait sec dans le miscella. L'extrait sec du miscella est monophasique et liquoreux (plus visqueux qu'un ester éthylique). Aucune décantation de glycérine n'est obtenue.

Tableau 19

| Rendement | Exemple selon US 2005/0011112 | Essai comparatif | Ecart entre les 2 essais (%) |
|---|---|---|---|
| Tourteau sec, g | 520 | 646 | + 24 % |
| Ethanol récupéré du tourteau, g | 80 | 281 | + 250% |
| Extrait sec, g | 560 | 337 | - 40% |
| Ester éthylique, g | 505 | 0,0 | - 100% |
| Glycérine, g | 55 | 0,0 | - 100% |

Une analyse plus poussée de l'extrait sec du miscella a été réalisée en déterminant sa teneur en ester éthylique et en glycérides (par CPG) ainsi que la teneur en cendres (le taux de cendres permet de quantifier la quantité de sodium présent sous forme de sels, de savons et de catalyseur non consommé). Nous avons obtenu les résultats suivants :

- Esters éthyliques : non détecté
- Triglycérides : 100%
- Diglycérides : non détecté
- Monoglycérides : non détecté
- Cendres : 0,4%.

L'extrait sec du miscella n'est constitué au plan lipidique que de triglycérides non transformés en esters. La teneur en cendres indique que le sodium est faiblement présent dans le miscella et non sous forme de savons comme on pouvait le supposer. Le sodium doit probablement être piégé dans le tourteau. Enfin, l'analyse chromatographique n'a pas détecté la présence d'esters.

En conclusion, il apparaît donc que le procédé décrit dans le document US 2005/0011112 ne produit pas d'ester éthylique.

## Revendications

1. Procédé de traitement de graines de ricin, lesdites graines ayant un taux d'acidité inférieur à 2 mg KOH/g et contenant de la ricine et de l'allergène CB-1A, ledit procédé comprenant les étapes suivantes :

   i) une étape de conditionnement des graines ;
   ii) une étape de mise en contact des graines conditionnées avec un alcool léger anhydre et un catalyseur alcalin dans des conditions de température et de durée suffisantes pour permettre l'extraction et la transestérification de l'huile végétale et conduisant à l'obtention d'un mélange comprenant des esters d'acides gras et du glycérol, et d'un tourteau.

   **caractérisé en ce que** l'étape i) comprend des opérations d'aplatissage et de séchage des graines.

2. Procédé selon la revendication 1 dans lequel l'étape i) comprend également un préchauffage des graines à une température inférieure ou égale à 100°C, l'opération de préchauffage étant effectuée avant l'aplatissage.

3. Procédé selon l'une des revendications 1 et 2 dans lequel l'opération de séchage de graines aplaties de l'étape i) est réalisée rapidement après aplatissage, en moins de une heure, de préférence après 5 à 10 minutes, à une température suffisante pour réduire le taux d'humidité des graines à 2% en poids ou moins.

4. Procédé selon l'une quelconque des revendications 1 à 3 dans lequel l'étape ii) comprend une première réaction effectuée à une température allant de 30 à 75°C, de préférence à environ 50°C, pendant 15 à 60 minutes, de préférence de 20 à 40 minutes, suivie d'une extraction à l'alcool effectuée en 3 à 9 étages et à contre-courant.

5. Procédé selon l'une quelconque des revendications 1 à 4 dans lequel l'opération d'aplatissage est effectuée au moyen d'un aplatisseur mécanique à rouleaux.

24

6. Procédé selon l'une quelconque des revendications 1 à 5 dans lequel les étapes i) et ii) sont réalisées en continu.

7. Procédé selon l'une quelconque des revendications 1 à 6 dans lequel l'alcool léger est le méthanol et le catalyseur alcalin est la soude.

8. Procédé selon l'une quelconque des revendications 1 à 7 dans lequel le rapport massique catalyseur/alcool/graines compris dans la gamme 0,001 à 0,01/0,1 à 5/1.

9. Procédé selon l'une quelconque des revendications 1 à 8 dans lequel le mélange comprenant des esters d'acides gras et du glycérol est soumis à une étape de décantation permettant d'obtenir une phase supérieure composée majoritairement d'esters gras d'acide ricinoléique et une phase inférieure composée majoritairement de glycérine et d'eau.

10. Procédé selon la revendication 9 dans lequel ladite phase supérieure est soumise à une succession de réactions chimiques conduisant à l'obtention d'acide 11-amino undécanoïque.

11. Procédé selon l'une quelconque des revendications 1 à 10 dans lequel, lorsque les graines de ricin sont mélangés avec des graines oléagineuses dans un rapport allant de 1 :1 à 1 :10, on obtient un mélange d'esters méthyliques d'acides gras comprenant de 15 à 75%, de préférence de 30 à 75% en poids d'esters méthyliques d'acide ricinoléique.

12. Procédé selon la revendication 11 dans lequel ledit mélange d'esters méthyliques est utilisé comme biocarburant.

13. Procédé selon l'une quelconque des revendications 1 à 10 dans lequel le tourteau obtenu est soumis à une étape de séchage dans des conditions de température et durée suffisantes pour inactiver et la ricine et l'allergène CB-1A.

14. Procédé selon la revendication 13 dans lequel le séchage du tourteau est effectué à l'étuve ventilée pendant 4h à une température inférieure ou égale à 200°C, de préférence inférieure ou égale à 150°C et encore plus préférentiellement inférieure ou égale à 120°C.

15. Procédé selon l'une quelconque des revendications 1 à 10 comprenant le mélange des tourteaux de ricin à l'état humide avec des tourteaux de sal (*Shorea robusta).*

16. Procédé selon l'une quelconque des revendications 1 à 10 comprenant une étape d'ajout de tannins et/ou de polyphénols, sous forme de solutions destinées à imbiber les tourteaux obtenus, pendant une durée suffisante pour inactiver la ricine et l'allergène CB-1A.

17. Tourteau susceptible d'être obtenu par le procédé selon l'une des revendications 1 à 11, 13 à 16 présentant :

   - un taux de détoxification en ricine d'au moins 90% et de préférence d'au moins 95%, en activité, comme mesuré au moyen d'un test ELISA,
   - aucun pouvoir sensibilisant dû à l'allergène CB-1A comme évalué au moyen du test LLNA,
   - et un taux d'ions $Ca^{2+}$ qui est inférieur à 1% en poids par rapport au poids du tourteau.

18. Utilisation du tourteau selon la revendication 17 dans l'alimentation animale.


**Patentansprüche**

1. Verfahren zur Behandlung von Rizinussamen, wobei die Samen eine Säurezahl von weniger als 2mg KOG/g aufweisen und Ricin und das Allergen CB-1A enthalten, wobei das Verfahren die folgenden Schritte umfasst:

   i) einen Schritt, in dem die Samen konditioniert werden;
   ii) einen Schritt, in dem die konditionierten Samen mit einem wasserfreien leichten Alkohol und einem alkalischen Katalysator in Kontakt gebracht werden, und zwar unter Temperatur- und Zeitdauerbedingungen, die ausreichen, um die Extraktion und Umesterung des pflanzlichen Öls zu gestatten und die dazu führen, dass man zu einer Mischung, die Fettsäureester und Glyzerin umfasst, und zu einem Presskuchen gelangt,

   **dadurch gekennzeichnet, dass** Schritt i) Arbeitsgänge des Quetschens und Trocknens der Samen umfasst.

**2.** Verfahren nach Anspruch 1, in dem Schritt i) auch ein Vorerhitzen der Samen auf eine Temperatur von 100°C oder darunter umfasst, wobei der Arbeitsgang des Vorerhitzens vor dem Quetschen erfolgt.

**3.** Verfahren nach einem der Ansprüche 1 und 2, bei dem der Arbeitsgang des Trocknens der gequetschten Samen von Schritt i) rasch nach dem Quetschen erfolgt, und zwar innerhalb von weniger als einer Stunde, vorzugsweise nach 5 bis 10 Minuten, und bei einer Temperatur, die für das Reduzieren des Wassergehalts der Samen auf 2 Gew.-% oder weniger ausreicht.

**4.** Verfahren nach einem der Ansprüche 1 bis 3, bei dem Schritt ii) eine erste Reaktion, die bei einer Temperatur von 30 bis 75°C, vorzugsweise bei ungefähr 50°C, über 15 bis 60 Minuten, vorzugsweise 20 bis 40 Minuten, erfolgt, gefolgt von einer Extraktion mit dem Alkohol, die in 3 bis 9 Schritten im Gegenstromverfahren erfolgt, umfasst.

**5.** Verfahren nach einem der Ansprüche 1 bis 4, bei dem der Arbeitsgang des Quetschens in einer mechanischen Walzenquetschmühle erfolgt.

**6.** Verfahren nach einem der Ansprüche 1 bis 5, bei dem die Schritte i) und ii) kontinuierlich erfolgen.

**7.** Verfahren nach einem der Ansprüche 1 bis 6, bei dem es sich bei dem leichten Alkohol um Methanol und bei dem alkalischen Katalysator um Natriumhydroxid handelt.

**8.** Verfahren nach einem der Ansprüche 1 bis 7, bei dem das Katalysator/Alkohol/Samen-Gewichtsver-hältnis im Bereich von 0,001 bis 0,01/0,1 bis 5/1 liegt.

**9.** Verfahren nach einem der Ansprüche 1 bis 8, bei dem mit der Mischung, umfassend Fettsäureester und Glyzerin, ein Dekantierschritt erfolgt, um zu einer oberen Phase, die großteils aus Ricinolsäure-Fettsäureestern besteht, und einer unteren Phase, die großteils aus Glyzerin und Wasser besteht, zu gelangen.

**10.** Verfahren nach Anspruch 9, bei dem mit der oberen Phase eine Abfolge von klinischen Reaktionen durchgeführt wird, wodurch man zu 11-Aminoundecansäure gelangt.

**11.** Verfahren nach einem der Ansprüche 1 bis 10, bei dem man, wenn die Rizinussamen mit Ölsamen in einem Verhältnis von 1:1 bis 1:10 vermischt werden, zu einer Mischung von Fettsäuremethylestern, die 15 bis 75 Gew.-%, vorzugsweise 30 bis 75 Gew.-%, Rizinolsäuremethylester umfassen, gelangt.

**12.** Verfahren nach Anspruch 11, bei dem die Methylestermischung als Biokraftstoff verwendet wird.

**13.** Verfahren nach einem der Ansprüche 1 bis 10, bei dem mit dem erhaltenen Presskuchen ein Trocknungsschritt unter Temperatur- und Zeitdauerbedingungen, die ausreichen, um das Ricin und das Allergen CB-1A zu inaktivieren, durchgeführt wird.

**14.** Verfahren nach Anspruch 13, bei dem das Trocknen des Presskuchens über einen Zeitraum von 4 h bei einer Temperatur von 200°C oder darunter, vorzugsweise von 150°C oder darunter, noch stärker bevorzugt von 120°C oder darunter, in einem belüfteten Ofen erfolgt.

**15.** Verfahren nach einem der Ansprüche 1 bis 10, bei dem die Rizinuspresskuchen im feuchten Zustand mit Presskuchen von Sal (*Shorea robusta*) vermischt werden.

**16.** Verfahren nach einem der Ansprüche 1 bis 10, umfassend einen Schritt des Versetzens mit Tanninen und/oder Polyphenolen in Form von Lösungen zum Tränken der erhaltenen Presskuchen über einen Zeitraum, der ausreicht, um das Rizin und Allergen CB-1A zu inaktivieren.

**17.** Nach dem Verfahren nach einem der Ansprüche 1 bis 11, 13 bis 16 erhältlicher Presskuchen mit:

- einem Ricinentgiftungsgrad von mindestens 90%, vorzugsweise mindestens 95% der Aktivität gemäß Bestimmung im ELISA-Test,
- keinerlei durch das Allergen CB-1A hervorgerufener Sensitivierungswirkung gemäß Aufwertung mit dem LLNA-Test,
- und einem $Ca^{2+}$-Gehalt von weniger als 1 Gew.-% in Bezug auf das Gewicht des Presskuchens.

**18.** Verwendung des Presskuchens nach Anspruch 17 in der Tierernährung.

**Claims**

**1.** A method for treating castor seeds, said seeds having a degree of acidity of less than 2 mg KOH/g and containing ricin and CB-1A allergen, said method comprising the following steps:

i) a seed processing step;
ii) a step of bringing the processed seeds into contact with a light anhydrous alcohol and an alkaline catalyst under temperature and time conditions sufficient to allow the extraction and the transesterification of the vegetable oil, and producing a mixture comprising fatty acid esters and glycerol, and an oil cake,

**characterized in that** step i) comprises seed flattening and drying operations.

**2.** The method as claimed in claim 1, in which step i) also comprises preheating the seeds at a temperature of less than or equal to 100°C, the preheating operation being carried out before the flattening.

**3.** The method as claimed in either of claims 1 and 2, in which the flattened-seed drying operation of step i) is carried out rapidly after flattening, in less than one hour, preferably after 5 to 10 minutes, at a temperature sufficient to reduce the moisture content of the seeds to 2% by weight or less.

**4.** The method as claimed in any one of claims 1 to 3, in which step ii) comprises a first reaction carried out at a temperature ranging from 30 to 75°C, preferably at approximately 50°C, for 15 to 60 minutes, preferably 20 to 40 minutes, followed by an extraction with alcohol carried out in 3 to 9 stages and in a countercurrent direction.

**5.** The method as claimed in any one of claims 1 to 4, in which the flattening operation is carried out by means of a mechanical roller flattener.

**6.** The method as claimed in any one of claims 1 to 5, in which steps i) and ii) are carried out continuously.

**7.** The method as claimed in any one of claims 1 to 6, in which the light alcohol is methanol and the alkaline catalyst is sodium hydroxide.

**8.** The method as claimed in any one of claims 1 to 7, in which the catalyst/alcohol/seeds weight ratio is included in the range 0.001 to 0.01/0.1 to 5/1.

**9.** The method as claimed in any one of claims 1 to 8, in which the mixture comprising fatty acid esters and glycerol is subjected to a decanting step which makes it possible to obtain an upper phase composed predominantly of ricinoleic acid fatty esters and a lower phase composed predominantly of glycerin and of water.

**10.** The method as claimed in claim 9, in which said upper phase is subjected to a succession of chemical reactions producing 11-aminoundecanoic acid.

**11.** The method as claimed in any one of claims 1 to 10, in which, when the castor seeds are mixed with oleaginous seeds in a ratio ranging from 1:1 to 1:10, a mixture of fatty acid methyl esters comprising from 15% to 75%, preferably from 30% to 75% by weight of ricinolic acid methyl esters is obtained.

**12.** The method as claimed in claim 11, in which said mixture of methyl esters is used as a biofuel.

**13.** The method as claimed in any one of claims 1 to 10, in which the oil cake obtained is subjected to a drying step under temperature and time conditions sufficient to inactivate both the ricin and the CB-1A allergen.

**14.** The method as claimed in claim 13, in which the drying of the oil cake is carried out in a ventilated oven for 4 h at a temperature of less than or equal to 200°C, preferably less than or equal to 150°C, and even more preferably less than or equal to 120°C.

**15.** The method as claimed in any one of claims 1 to 10, comprising mixing the castor oil cakes in the wet state with sal (*Shorea robusta*) oil cakes.

16. The method as claimed in any one of claims 1 to 10, comprising a step of adding tannins and/or polyphenols, in the form of solutions intended to soak the oil cakes obtained, for a sufficient period of time to inactivate the ricin and the CB-1A allergen.

17. An oil cake which can be obtained by means of the method as claimed in one of claims 1 to 11 and 13 to 16, which has:

- a degree of ricin detoxification of at least 90% and preferably of at least 95%, with respect to activity, as measured by means of an ELISA assay,
- no sensitizing capacity due to the CB-1A allergen as evaluated by means of the LLNA assay,
- and a level of $Ca^{2+}$ ions which is less than 1% by weight relative to the weight of the oil cake.

18. The use of the oil cake as claimed in claim 17, in animal feed.

Figure 1

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7112229 B
- US 20050011112 A
- US 3101266 A

**Littérature non-brevet citée dans la description**

- **ANANDAN et al.** *Animal Feed Science & Technology,* 2005, vol. 120, 159-168
- **MIKIC A. et al.** Anti-nutritional Factors in Some Grain Legumes. *Biotechnol. Anim. Husbandry,* 2009, vol. 25 (5-6), 1181-1188
- **EKOP A.S. et al.** *E - J. Chem.,* 2008, vol. 5 (4), 736-741
- **GANDHI et al.** *JAOCS,* 1994, vol. 71 (8), 827-831
- **BECHER F. et al.** Detection of Functional Ricin by Immunoaffinity and Liquid Chromatography - Tandem Mass Spectrometry. *Anal. Chem.,* 2007, vol. 79, 659-665
- **J.R. SPIES et al.** The Chemistry of Allergens. Inactivation of the Castor Bean Allergens and Ricin by Heating with Aqueous Calcium Hydroxyde. *Agric. Food Chem.,* 1962, vol. 10 (2), 140-145
- **HRIPT, J.-P. LEPOITTEVIN.** Allergènes de contacts forts. *Revue Française d'Allergologie et d'Immununologie Clinique,* 2008, vol. 48, 120-122